# EUROPEAN PATENT APPLICATION

(11) **EP 1 031 311 A1**
(43) Date of publication of application: **30.08.2000**
(21) Application number: 00300649.1
(22) Date of filing: 28.01.2000
(51) Int. Cl.: A47L 9/24, F16L 11/10, E01H 1/08, B08B 15/00

(54) **Suction hose comprising rigid and flexible portions**

(30) Priority: 16.02.1999 GB 9903344; 25.03.1999 GB 9906787; 05.05.1999 GB 9910254
(71) Applicant: Flexible Ducting Limited, London NW11 8DS (GB)
(72) Inventor: Gibson, Diane, Clydebank G81 2UG (GB); Lilley, Brian, Burv., Lancashire BL8 2LS (GB); McCabe, Gerard, Milngavie, Glasgow G62 8LX (GB); O'Neill, David, Crookston, Glasgow G52 3NB (GB)
(74) Representative: Flint, Jonathan McNeill

(57) **Abstract**

A street cleaner suction hose assembly 6, 6' has a flexible hose 60, 60' with a nozzle 62, 62' at one end. The nozzle 62, 62' is rigid, having a handle 50, 50' at its rear end and a passage 70 for cleaning fluid. The nozzle 62, 62' is formed integrally with the remainder of the hose 60, 60' by deforming an external helical reinforcement member 64, 64' of thermoplastic material into a continuous outer layer that is substantially rigid. Rigid regions 141 to 144 along a flume extraction hose 104 can be made in the same way.

## Description

This invention relates to flexible hoses of the kind having a rear end for attachment to apparatus and a forward end with a nozzle.

Suction hose assemblies, such as for use in street cleaning suction machines, usually have a helically-reinforced flexible hose attached at one end to a rigid nozzle, which may be an aluminium tube. The nozzle is inserted in the end of the hose and the hose is secured to the nozzle by means of a clamp fastened about the hose. Hose assemblies are also often used to extract flumes, such as produced during welding or similar operations, since the flexibility of hose assemblies enables the inlet end to be positioned for maximum effectiveness. Such hoses assemblies generally comprise a number of rigid sections, typically metal tubes, connected with one another by separate helically-reinforced flexible sections. The flexible sections are joined with the rigid sections by means of clamps where the flexible sections overlap the ends of the rigid sections. The hose assembly is usually supported at the rigid sections, such as by means of telescopic supports, overhead wires or the like. The construction of these assemblies makes them relatively expensive. Although short integral cuffs have been previously provided at the ends of a reinforced hose, as in the Supergas hose sold by Flexible Ducting Limited of Glasgow, Scotland, no one has previously provided an integral rigid nozzle or rigid sections between the ends of a flexible hose.

It is an object of the present invention to provide an alternative form of hose assembly and system.

According to the present invention there is provided a flexible hose of the above-specified kind, characterised in that the hose is reinforced by a helical member of a thermoplastic material presented externally of the hose, that the hose has at least one region formed with a continuous substantially rigid outer layer, and that the length of the region is at least several times the diameter of the hose.

The continuous substantially rigid layer is preferably formed from the helical member deformed to a continuous layer. The substantially rigid region may be the nozzle, which may have its forward end cut at an inclined angle. The hose may have a handle in the region of the rear end of the nozzle. The hose may include a passage for supply of liquid along the length of the hose opening at the forward end of the nozzle. The hose may include a valve operable to control flow of liquid along the passage, the valve being actuable in the region of the rear end of the nozzle. The hose may include at least two of the substantially rigid regions separated from one another and from the ends of the hose by respective flexible sections. The hose may include a support to support the nozzle in different positions, the support preferably being attached to the substantially rigid regions and being external of the hose.

Hose assemblies and systems according to the present invention, will now be described, by way of example, with reference to the accompanying drawings, in which:
- Figure 1: is a rear view of a street cleaner vehicle;
- Figure 2: is a side elevation view of the suction hose assembly;
- Figure 3: is an enlarged transverse section of the nozzle of the hose assembly along the line III-III of Figure 2;
- Figure 4: is a side elevation view of an alternative suction hose assembly;
- Figure 5: is a simplified view of a fume extraction system; and
- Figure 6: is a side elevation view of the hose assembly in the flame extraction system;

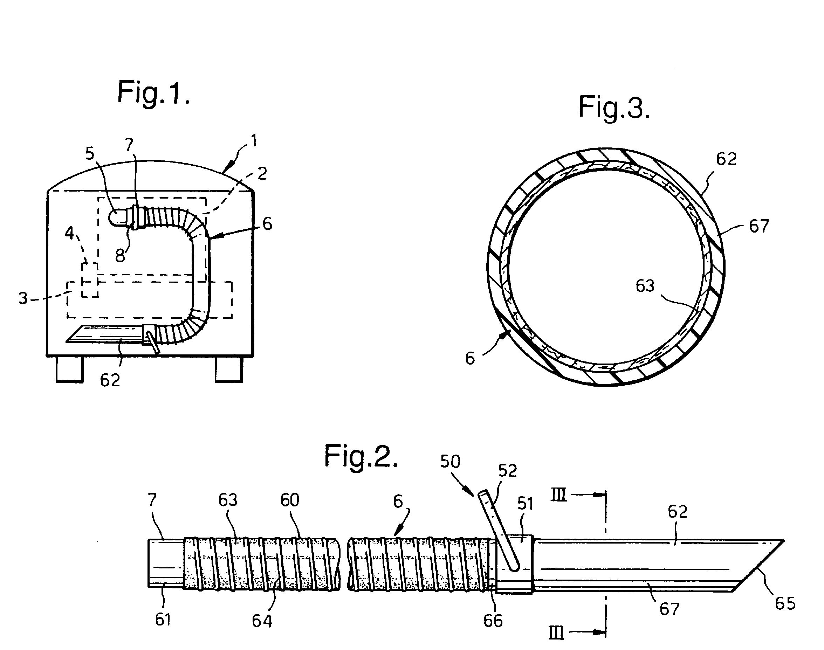

With reference to Figure 1 there is shown a conventional street cleaning vehicle 1 containing a conventional suction apparatus 2 and a receptacle 3 for material discharged from the outlet 4 of the suction apparatus. The apparatus 2 has a suction inlet in the form of a short elbow conduit 5 projecting at the rear of the vehicle 1. A suction hose assembly 6 is attached at its rear end 7 to the suction inlet 5 by means of a clamp 8.

The suction hose assembly 6 is shown most clearly in Figures 2 and 3. The hose assembly 6 is of integral form comprising a flexible hose 60 along the major part of its length, a short cuff 61 at its rear end 7 and an elongate nozzle 62 at its forward end. Typically, the hose assembly 6 is about 3m long and about 150mm in diameter. The flexible hose 60 comprises a tubular body 63 formed of a strip of impregnated fabric material, such as polyester fabric coated with thermoplastic rubber. The hose assembly is formed by wrapping the strip helically on a mandrel with overlapping edges that are bonded together in a conventional manner. The hose 60 also includes a reinforcement member in the form of a helical bead 64 of a relatively rigid thermoplastics material, such as polypropylene, wound subsequently, externally around the tubular body 63. The bead 64 serves the dual purpose of providing reinforcement to prevent radial deformation of the hose 60 during bending or when subject to radial force, and it also helps protect the tubular body 63 from damage caused by abrasion.

The nozzle 62 is about 700mm long, that is, several times the diameter of the hose, and its forward end is cut at an angle of about 45° to form a bevelled end 65. The nozzle 62 is substantially rigid so that it can be held at its rear end 66 and its forward end 65 positioned as desired. The outer surface of the nozzle 62 comprises a continuous layer 67 of the material forming the reinforcement bead 64. This continuous layer 67 is provided by flattening the reinforcement bead 64 with rollers where it extends along the region that is to be the nozzle while it is still warm and soft as it emerges from the machine in which the bead is applied. This causes adjacent turns of the bead to flow into one another to form a continuous layer. The outer layer 67 along the nozzle 62 is substantially rigid, making the nozzle as a whole rigid. The outer surface of the nozzle 62 may still be slightly ribbed since it is not necessary entirely to flatten the bead 64. The outer plastics layer 67, as well as providing the rigidity for the nozzle 62, also gives the outer surface of the nozzle a wipe-clean surface.

The cuff 61 at the rear end 7 of the hose assembly 6 is similarly formed by deforming the reinforcement bead 64 along a short length to form a region with a relatively smooth outer surface. This enables the rear end 7 to be slipped onto the inlet conduit 5 of the suction apparatus 2 and held in position by the clamp 8 applied to the outside of the cuff 61.

The assembly is completed by a handle fitting 50 comprising a moulded collar 51 and loop handle 52. The collar 51 embraces the nozzle 62 at its upper end and is attached with it by an adhesive or the like. The loop handle 52 projects outwardly to be gripped by the user to enable him to manipulate the end of the nozzle.

A continuous rigid layer could be formed on the outside of the nozzle in other ways than by deforming the reinforcement bead. For example, a layer of material could be applied to fill the space between the turns of the reinforcement bead. This would result in a more robust but heavier nozzle. It will be appreciated that the invention is not confined to street cleaning suction applications but could be used in other hose assemblies.

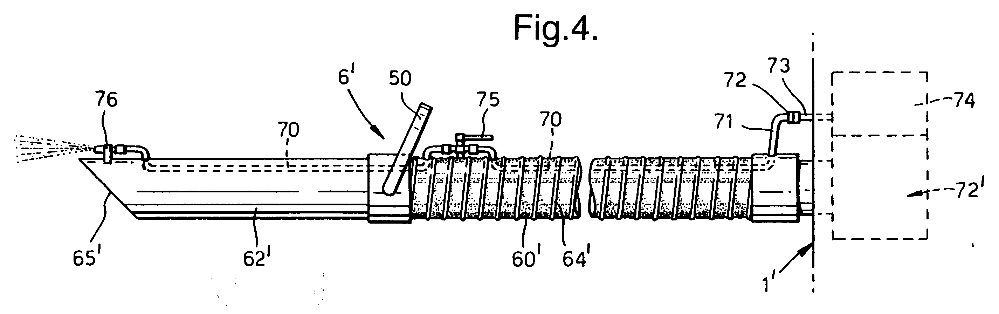

The suction hose assembly could be provided with means for supplying cleaning fluid to the road, or other surface being cleaned, as shown in Figure 4. Features of the hose assembly 6' identical to those in the assembly 6 are given the same number with the addition of a prime'. The assembly 6' is identical to that in Figures 2 and 3 except that it also has a fluid conduit 70 extending along its length. The conduit 70 takes the form of a small-bore flexible tube extending inside the assembly 6' along most of its length. At its rear end 71, the conduit 70 extends externally through the wall of the flexible hose 60' and is terminated by a conventional fluid coupling 72, which is coupled to a coupling 73 on the vehicle 1'. The suction/cleaning apparatus 2' in the vehicle 1' includes a supply 74 of water, or other cleaning fluid, which is pumped to its outlet coupling 73.

Towards the forward end of the flexible hose 60', the fluid conduit 70 emerges through the wall of the hose and is connected to one end of a trigger valve 75. The forward end of the fluid conduit 70 is connected to the other end of the trigger valve 75 and continues internally along the nozzle 62'. Just before the forward end 65' of the suction nozzle 62', the conduit 70 extends externally through its wall and is connected to a spray nozzle 76 mounted on the outside of the suction nozzle 62' and directed forwardly.

In operation, the water supply 74 in the suction/cleaning apparatus 2' pumps water into the rear end of the conduit 70. The normal state of the trigger valve 75 is closed so that water cannot flow along the conduit. The user holds the suction nozzle 62' towards its rear end and can, therefore, readily operate the trigger valve 75 when necessary. This causes a spray of water to emerge from the spray nozzle 76 so as loosen material to enable it to be removed more easily by the suction nozzle.

There are other applications where a hose assembly is required to have a flexible and a rigid section, such as in a fume extraction unit.

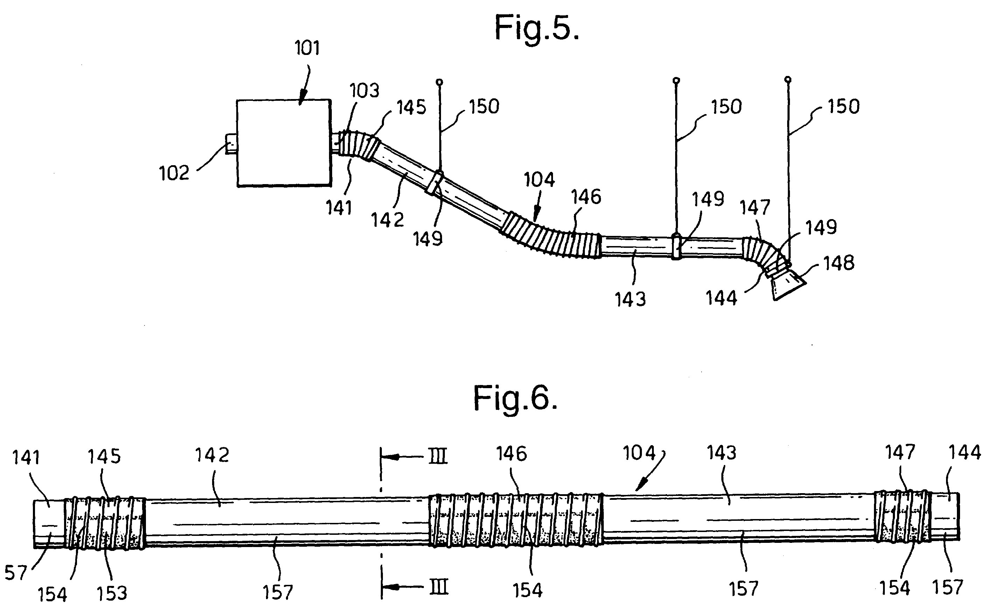

With reference to Figure 5 the fume extraction system comprises an extraction unit 101 comprising a conventional fan and filters. The unit 101 has an outlet 102 venting to atmosphere and a short inlet conduit 103 to which is a fume extraction hose assembly 104 is connected.

The extraction hose assembly 104 is shown most clearly in Figure 6. The hose assembly 104 is of integral form being typically between about 70mm and 200mm in diameter and being between about 2m and 4m in length. The hose assembly 104 comprises a number of rigid sections and a number of flexible sections. In the present example, the hose assembly 104 has four rigid sections 141 to 144 and three flexible sections 145 to 147, although the assembly could have any number of two or more rigid sections. The first and last rigid sections 141 and 144 are relatively short and serve to make connection with the extractor inlet conduit 103 and a separate cowl 148. The other two rigid sections 142 and 142 are longer and are equally spaced along the hose assembly 104, typically having a length several times the diameter of the hose. These rigid sections 142 and 143 enable the hose assembly 104 to be supported by means of straps 149, or the like, wrapped about the sections and attached to wires 150 or some other support. The inlet end section or nozzle 144 of the hose assembly 103 is similarly supported. If the hose assembly has a small diameter and is light in weight it can be supported instead by tension springs extending within the hose.

As with the previously-described hose assemblies, the hose assembly 104 comprises a tubular body 153 formed of a helical strip of fabric material and a reinforcement member in the form of a helical bead 154 of a relatively rigid thermoplastics material, such as polypropylene, applied externally around the tubular body.

The rigid regions 141 to 144 each have a continuous layer 157 of the material forming the reinforcement bead 154. This continuous layer 157 is provided by flattening the reinforcement bead 154 where it extends along regions that are to be rigid to form a continuous layer 157. The outer layer 157 along the rigid regions 141 to 144 is substantially rigid, making the regions as a whole rigid.

The hose assembly of the present invention provides a completely integral assembly avoiding the cost and assembly operation needed to join sections of flexible hose to rigid tubes. The hose assembly can be light in weight. The absence of joins reduces the risk of leaks and damage where the hose flexes over a rigid insert. The assembly avoids the need for any external clamps to join the different sections together, making the assembly easier to handle.

It will be appreciated that the invention could be used in other applications where it is necessary to have rigid regions along a hose assembly.

## Claims

1. A flexible hose (6, 6', 104) having a rear end (61) for attachment to apparatus (2, 2', 101) and a forward end (65, 65') with a nozzle (62, 62', 144), characterised in that the hose is reinforced by a helical member (64, 64', 154) of a thermoplastic material presented externally of the hose, that the hose has at least one region (62, 62', 142, 143) formed with a continuous substantially rigid outer layer (67), and that the length of the region (62, 62', 142, 143) is at least several times the diameter of the hose.

2. A hose according to Claim 1, characterised in that the continuous substantially rigid layer (67) is formed from the helical member (64, 64' 154) deformed to a continuous layer.

3. A hose according to Claim 1 or 2, characterised in that the substantially rigid region is the nozzle (62, 62').

4. A hose according to Claim 3, characterised in that the forward end (65, 65') of the nozzle (62, 62') is cut at an inclined angle.

5. A hose according to Claim 3 or 4, characterised in that the hose has a handle (50, 50') in the region of the rear end of the nozzle (62, 62').

6. A hose according to any one of Claims 3 to 5, including a passage (70) for supply of liquid along the length of the hose (6') opening at the forward end of the nozzle (65').

7. A hose according to Claim 6, characterised in that the hose (6') includes a valve (75) operable to control flow of liquid along the passage (70), and that the valve is actuable in the region of the rear end of the nozzle (62').

8. A hose according to Claim 1 or 2, characterised in that the hose (101) includes at least two of the substantially rigid regions (142 and 143) separated from one another and from the ends of the hose by respective flexible sections (145, 146 and 147).

9. A hose for flame extraction according to Claim 8, characterised in that the hose (101) includes a support (149, 150) to support the nozzle (144) in different positions.

10. A hose according to Claim 9, characterised in that the support (149, 150) is attached to the substantially rigid regions (142 and 143) and is external of the hose (101).
